# EUROPÄISCHE PATENTSCHRIFT

(11) **EP 2 193 289 B1**
(45) Veröffentlichungstag und Bekanntmachung des Hinweises auf die Patenterteilung: **14.12.2011**
(21) Anmeldenummer: 08803043.2
(22) Anmeldetag: 15.08.2008
(51) Int. Cl.: F16H 47/04, F16H 57/02

(54) **STUFENLOSE GETRIEBEVORRICHTUNG FÜR EIN FAHRZEUG**
VARIABLE TRANSMISSION DEVICE FOR A VEHICLE
DISPOSITIF DE TRANSMISSION À VARIATION CONTINUE POUR UN VÉHICULE

(30) Priorität: 02.10.2007 DE 102007047194; 16.07.2008 DE 102008040450
(43) Veröffentlichungstag der Anmeldung: 09.06.2010
(73) Patentinhaber: ZF Friedrichshafen AG, 88038 Friedrichshafen (DE)
(72) Erfinder: POHLENZ, Jürgen, 88214 Ravensburg (DE); BAILLY, Gerhard, 88046 Friedrichshafen (DE); RATZMANN, Thomas, 88074 Meckenbeuren (DE)
(86) Internationale Anmeldenummer: PCT/EP2008/060751
(87) Internationale Veröffentlichungsnummer: WO 2009/047031

(56) Entgegenhaltungen:
- WO-A-2006/042434
- US-A- 6 029 542
- US-A1- 2003 150 662

## Beschreibung

Die Erfindung betrifft eine stufenlose Getriebevorrichtung für ein Fahrzeug mit einem Variator gemäß der im Oberbegriff des Patentanspruches 1 näher definierten Art.

Ein hydrostatisch-mechanisches Traktorengetriebe mit einem stufenlosen hydrostatischen Antrieb ist aus der DE 10 2006 025 348 A1 bekannt. Der hydrostatische Antrieb weist eine von einem Verbrennungsmotor angetriebene hydrostatische Pumpe und einen von der Pumpe angetriebenen Hydromotor auf. Die Pumpe und der Hydromotor sind über ein einziges, gemeinsames Schwenkteil zwangsgekoppelt und derart verstellbar, dass die Pumpe zwischen einem minimalen Winkel und einem maximalen Winkel verschwenkbar ist, während zugleich der Motor synchron von einem maximalen Schwenkwinkel zu einem minimalen Winkel verschwenkt. Die Pumpe ist für eine einzige Förderrichtung des Volumenstroms ausgelegt. Ein mechanisches Bereichsgetriebe mit mehreren Schaltstufen, die über eine Kupplung schaltbar sind, ist nachgeschaltet.

Darüber hinaus ist aus der DE 19 52 966 A eine Getriebevorrichtung mit Leistungsverzweigung bekannt, welche einen Variator, einen Doppelplanetenradsatz und eine Schaltgetriebeeinrichtung zur Darstellung mehrerer Fahrbereiche umfasst. Die Pumpen- und die Motoreinrichtung des als Hydrostateinrichtung ausgeführten Variators sind über ein gemeinsames Joch verstellbar.

Die WO 2006/042434 A offenbart eine Getriebevorrichtung nach dem Oberbegriff des Hauptanspruchs.

Der vorliegenden Erfindung liegt die Aufgabe zugrunde, die aus dem Stand der Technik bekannten Getriebevorrichtungen derart weiterzubilden, dass der Variator und die Planetengetriebeeinrichtung während einer Montage der Getriebevorrichtungen einfach einbaubar und zu Servicezwecken mit geringem Aufwand demontierbar sind.

Erfindungsgemäß wird diese Aufgabe mit einer stufenlosen Getriebevorrichtung gemäß den Merkmalen des Patentanspruches 1 gelöst.

Die erfindungsgemäße stufenlose Getriebevorrichtung für ein Fahrzeug ist mit einem Variator, einer Planetengetriebeeinrichtung und einer Schaltgetriebeeinrichtung ausgebildet, die in einem Getriebegehäuse angeordnet sind, wobei der Variator im Bereich einer ersten Welle und im Bereich einer zweiten Welle mit der Planetengetriebeeinrichtung und der Schaltgetriebeeinrichtung wirkverbunden ist.

Erfindungsgemäß bilden der Variator und die Planetengetriebeeinrichtung ein Modul aus und sind auf einer gemeinsamen Trägerplatte angeordnet.

Damit sind der Variator und die damit zusammenwirkende Planetengetriebeeinrichtung während der Montage der Getriebevorrichtung als vormontiertes Modul mit geringem Aufwand einbaubar und beim Auftreten von Verschleiß auf einfache Art und Weise demontierbar und durch ein funktionierendes, vorgeprüftes Modul ersetzbar. Das das demontierte Modul ersetzende Modul ist im Servicefall kostengünstig als geprüfte Einheit vor Ort am Fahrzeug tauschbar.

Bei einer vorteilhaften Weiterbildung der Getriebevorrichtung nach der Erfindung steht eine Welle der Planetengetriebeeinrichtung mit einer Getriebeeingangswelle in Wirkverbindung, die mit einer Antriebsmaschine eines Fahrzeugantriebsstranges verbindbar ist, wobei die beiden Wellen des Variators jeweils mit weiteren Wellen der Planetengetriebeeinrichtung wirkverbunden sind. Damit wird erreicht, dass der nur begrenzt einstellbaren Drehzahl der Getriebeantriebswelle die stufenlose Drehzahlverstellbarkeit des Variators überlagert ist und im Bereich der Planetengetriebeeinrichtung wenigstens zwei Wellen mit stufenlos veränderbarer Drehzahl zur Verfügung stehen.

Eine weitere Ausführungsform der stufenlosen Getriebevorrichtung nach der Erfindung ist mit einem als Hydrostateinrichtung in Schrägachsenbauweise mit wenigstens einer Verstelleinheit ausgeführt, um möglichst viel Leistung bei gleichzeitig geringem Bauraumbedarf der Getriebevorrichtung von einer Antriebsmaschine eines Fahrzeuges über die Getriebevorrichtung zu einem Abtrieb des Fahrzeuges führen zu können.

Über den Variator, die Planetengetriebeeinrichtung und die Schaltgetriebeeinrichtung darstellbare Übersetzungsbereiche der stufenlosen Getriebevorrichtung, deren Übersetzungen jeweils stufenlos variierbar sind, sind bei einer weiteren Ausführungsform der Getriebevorrichtung nach der Erfindung, bei der die Hydrostateinrichtung wenigstens eine verstellbare Pumpeneinrichtung und mindestens eine verstellbare Motoreinrichtung aufweist, die gemeinsam verstellbar ausgeführt sind, mit einer großen Spreizung zur Verfügung stellbar.

Bei einer weiteren Ausführungsform der erfindungsgemäßen stufenlosen Getriebevorrichtung ist der Variator länger als breit und tief ausgebildet und in seiner Längserstreckung in Einbaulage im Fahrzeug wenigstens annähernd vertikal ausgerichtet, womit aus stoßartigen Belastungen, die beispielsweise beim Überfahren von Fahrbahnunebenheiten, Schlaglöchern und dergleichen auftreten, resultierende und am Variator angreifende Stellkräfte, die ein unerwünschtes, selbstständiges Verstellen des Variators zumindest kurzzeitig auslösen können, reduziert bzw. vermieden sind, wobei dieser Vorteil besonders bei einer Ausführung des Variators als Hydrostateinrichtung in Schrägachsenbauweise mit gemeinsamer Verstellung der Pumpen- und Motoreinrichtung erreicht wird.

Das den Variator und die Planetengetriebeeinrichtung umfassende Modul ist bei einer vorteilhaften Ausführungsform der erfindungsgemäßen Getriebevorrichtung, bei der das Modul in Einbaulage in Vorwärtsfahrtrichtung und in Bezug auf eine Antriebsmaschine eines Fahrzeuges auf einer rechten oder einer linken Fahrzeugseite angeordnet ist, auf einfache Art und Weise von einer Fahrzeugseite ausgehend in seitlicher Richtung demontierbar.

Bei einer vorteilhaften Weiterbildung der stufenlosen Getriebevorrichtung nach der Erfindung ist der Variator in Einbaulage im Fahrzeug zwischen einer Antriebsmaschine des Fahrzeugs und der Planetengetriebeeinrichtung positioniert. Damit ist das den Variator und die Planetengetriebeeinrichtung umfassende Modul auf einfache Art und Weise durch Abziehen der Trägerplatte in Vorwärtsfahrtrichtung aus einem Fahrzeug ausbaubar, wenn seitlich keine Zugänglichkeit zum Getriebegehäuse besteht. Darüber hinaus ist das Modul auch einfach ausgehend von der Unterseite des Fahrzeuges bei entsprechender Zugänglichkeit ohne zusätzliches Demontieren von Fahrzeugteilen ausbaubar.

Ist der Variator in Einbaulage zwischen der Planetengetriebeeinrichtung und einer Fahrzeughinterachse des Fahrzeuges angeordnet, ist das Modul in einfacher Weise durch Abziehen der Trägerplatte in Rückwärtsfahrtrichtung aus einem Fahrzeug entnehmbar, wobei auch hier das Modul ausgehend von der Unterseite des Fahrzeuges bei entsprechender Zugänglichkeit ohne zusätzliches Montieren von Fahrzeugen oder ausgehend von einer Oberseite des Fahrzeuges durch Kippen einer Fahrzeugkabine ausbaubar ist.

Eine Montage des Moduls ist bei einer weiteren vorteilhaften Ausführungsform der erfindungsgemäßen stufenlosen Getriebevorrichtung dadurch vereinfacht, dass die Trägerplatte lösbar mit dem Getriebegehäuse verbunden und ein Teil des Getriebegehäuses ist, da während der Demontage des den Variator und die Planetengetriebeeinrichtung umfassenden Moduls lediglich die Trägerplatte vom Getriebegehäuse zu lösen ist und das Modul, ohne einen Getriebegehäusedeckel oder dergleichen demontieren zu müssen, entnehmbar ist.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
- Fig. 1: ein Räderschema der erfindungsgemäßen stufenlosen Getriebevorrichtung mit einem einen Variator und eine Planetengetriebeeinrichtung umfassenden Modul;
- Fig. 2: das Modul der Getriebevorrichtung 1 gemäß Fig. 1 in einer drei-dimensionalen Einzeldarstellung;
- Fig. 3: eine schematisierte dreidimensionale Seitenansicht der Getriebevorrichtung gemäß Fig. 1, wobei das Modul in Bezug auf eine Antriebsmaschine in Vorwärtsfahrtrichtung auf einer rechten Fahrzeugseite angeordnet ist;
- Fig. 4: eine Fig. 3 entsprechende Darstellung der Getriebevorrichtung gemäß Fig. 1, wobei das Modul in Vorwärtsfahrtrichtung auf einer linken Fahrzeugseite angeordnet ist;
- Fig. 5: eine Fig. 3 entsprechende Darstellung, wobei das Modul auf einer rechten Fahrzeugseite vor einer Fahrzeughinterachse angeordnet ist; und
- Fig. 6: eine Fig. 5 entsprechende Darstellung, wobei das Modul vor der Fahrzeughinterachse auf der linken Fahrzeugseite positioniert ist.

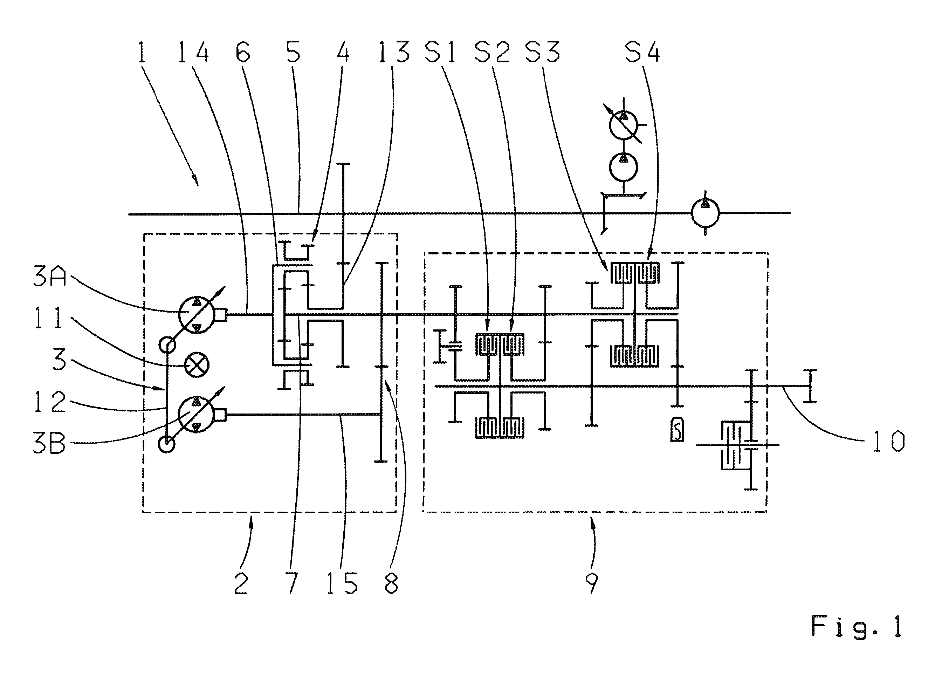

Fig. 1 zeigt ein Räderschema einer Getriebevorrichtung 1 mit stufenloser Übersetzungsverstellung, welches beispielsweise in landwirtschaftlichen Fahrzeugen einsetzbar ist. Über die Getriebevorrichtung 1 sind vorliegend drei Übersetzungsbereiche bzw. Fahrbereiche für Vorwärtsfahrt und ein Übersetzungsbereich für Rückwärtsfahrt darstellbar, innerhalb welchen die Übersetzung der Getriebevorrichtung stufenlos verstellbar ist.

Die stufenlose Verstellung der Getriebeübersetzung der Getriebevorrichtung 1 wird über einen stufenlosen Antriebssatz bzw. ein Modul 2 ermöglicht, der einen Variator 3 und eine Planetengetriebeeinrichtung 4 umfasst. Mittels der Planetengetriebeeinrichtung 4 wird der nur begrenzt einstellbaren Drehzahl einer Getriebeantriebswelle 5, die mit einer Antriebsmaschine eines Fahrzeugs gekoppelt ist, die stufenlose Drehzahlverstellbarkeit des Variators 3 überlagert. Als Ergebnis dieser Überlagerung stehen im Bereich der Planetengetriebeeinrichtung 4 zwei Wellen 6, 7 der Planetengetriebeeinrichtung 4 mit stufenlos veränderbarer Drehzahl zur Verfügung, wobei die erste Welle 6 als Planetenträger der Planetengetriebeeinrichtung 4 ausgeführt ist und mit einer verstellbaren Pumpeneinrichtung 3A des Variators 3 gekoppelt ist. Die zweite Welle 7 ist ein Sonnenrad der Planetengetriebeeinrichtung 4, welche über eine Stirnradverzahnung 8 mit einer verstellbaren Motoreinrichtung 3B des Variators 3 in Wirkverbindung steht. Die Pumpeneinrichtung 3A und die Motoreinrichtung 3B des als Hydrostateinrichtung ausgeführten Variators 3 sind jeweils in Schrägachsenbauweise ausgebildet und im Bereich einer Schwenkachse 11 über ein gemeinsames Joch 12 verschwenkbar.

Der stufenlose Antriebssatz 2 ist mit einer Schaltgetriebeeinrichtung 9 gekoppelt, die in Abhängigkeit der Leistungsfähigkeit des Variators 5 und auch in Abhängigkeit der konstruktiven Ausgestaltung der Planetengetriebeeinrichtung 4 ausgebildet ist. Über die Schaltgetriebeeinrichtung 9 erfolgt die Leistungsübertragung vom stufenlosen Antriebssatz 2 in Richtung einer Getriebeabtriebswelle 10. Darüber hinaus werden im Bereich der Schaltgetriebeeinrichtung 9 die geforderten Abtriebsdrehzahlen in den verschiedenen Übersetzungsbereichen dargestellt.

Die Schaltgetriebeeinrichtung 9 ist mit vier reibschlüssigen Schaltelementen S1 bis S4 ausgestaltet, wobei bei geschlossenem ersten Schaltelement S1 der Fahrbereich für Rückwärtsfahrt in der Getriebevorrichtung 1 eingelegt ist. Die Schaltelemente S2 bis S4 sind zur Darstellung der drei Fahrbereiche für Vorwärtsfahrt vorgesehen.

Ein zweites Sonnenrad 13 der Planetengetriebeeinrichtung 4 ist mit der Getriebeantriebswelle 5 verbunden. Die Variatorwellen 14 und 15 sind somit jeweils an eine Welle 6, 7 der Planetengetriebeeinrichtung 4 gekoppelt, die keine direkte Verbindung mit der Getriebeantriebswelle 5 aufweisen. Darüber hinaus sind die Variatorwellen 14 und 15 achsparallel zu den Wellen 6, 7 der Planetengetriebeeinrichtung 4 angeordnet, wobei die Variatorwelle 14 koaxial zu den Wellen 6, 7 positioniert ist.

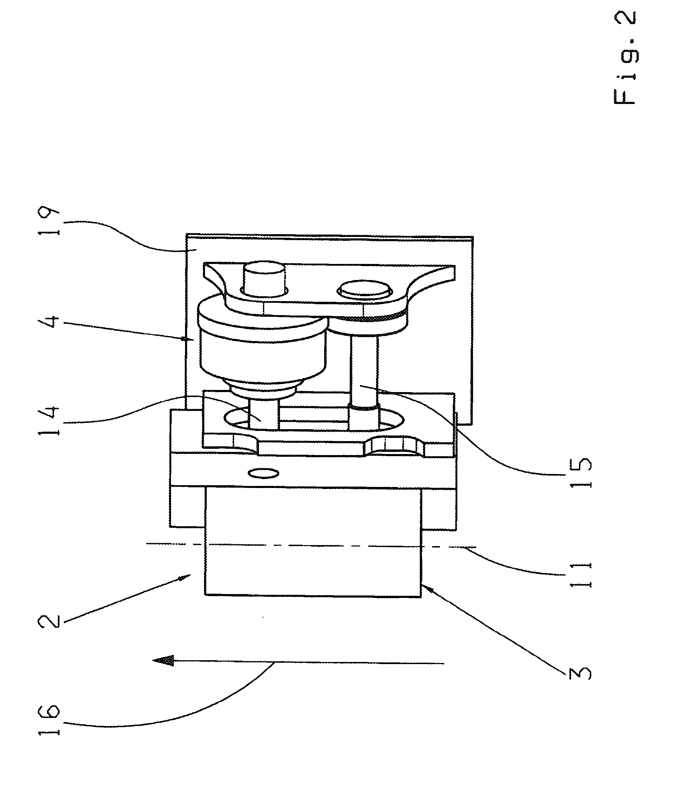

Der stufenlose Antriebssatz bzw. das Modul 2 ist in Fig. 2 in Alleindarstellung gezeigt. Aus der Darstellung gemäß Fig. 2 geht hervor, dass sowohl der Variator 3 als auch die Planetengetriebeeinrichtung 4 sowie alle notwendigen Koppelwellen zwischen dem Variator 3 und der Planetengetriebeeinrichtung 4 auf einer gemeinsamen Trägerplatte 19 montiert sind, die vorliegend einen Teil des Getriebegehäuses der Getriebevorrichtung 1 bildet.

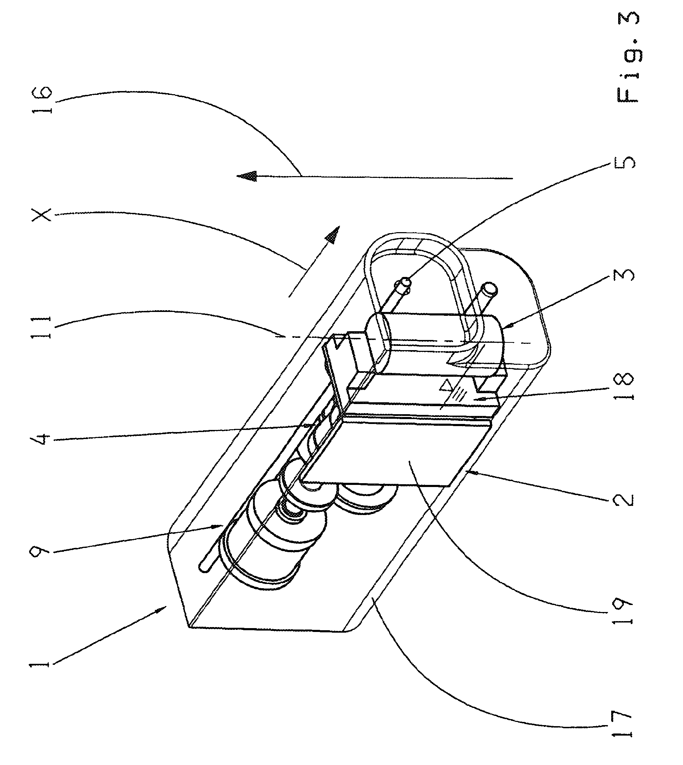

Um den Variator 3 zumindest kurzzeitig selbstständig verstellende und an dem die Pumpeneinrichtung 3A und die Motoreinrichtung 3B starr miteinander verbindenden Joch 12 des Variators 3 angreifende Stellkräfte zu vermeiden, die durch stoßartige Belastungen, wie beispielsweise beim Überfahren von Fahrbahnunebenheiten, Schlaglöchern und dergleichen verursacht werden, entspricht eine Orientierung der Schwenkachse 11 des Variators 3 in der in Fig. 3 dargestellten Einbaulage im Fahrzeug wenigstens annähernd der Orientierung einer Fahrzeughochachse 16. Damit ist die Wirkrichtung der betriebsbedingt am Variator 3 angreifenden Kräfte im Wesentlichen senkrecht zur Schwenkachse 11 des Variators 3 ausgerichtet, weshalb die Kräfte den Variator 3 bzw. dessen Pumpeneinrichtung 3A bzw. dessen Motoreinrichtung 3B nicht verstellen.

Zusätzlich ist der Variator 3 in Vorwärtsfahrtrichtung des Fahrzeuges, die durch den Pfeil X in Fig. 3 näher gekennzeichnet ist zwischen einer in der Figur nicht näher dargestellten Antriebsmaschine des Fahrzeuges und der Planetengetriebeeinrichtung 4 sowie der Schaltgetriebereinrichtung 9 angeordnet. Die Getriebevorrichtung 1 ist einerseits in radialer Richtung durch einen geringeren Bauraumbedarf und andererseits durch eine größere axiale Länge gekennzeichnet. Damit ist das Modul 2 aufgrund der in Vorwärtsfahrtrichtung X vorderen Anordnung des Variators 3 durch Lösen der Trägerplatte 19 vom Getriebegehäuse einfach zu demontieren, wobei der Variator 3 und die Planetengetriebeeinrichtung 4 gemeinsam mit der Trägerplatte 19 in Abhängigkeit der jeweiligen Ausführung des Fahrzeuges in Bezug auf eine Fahrzeugvorderachse nach vorne, in Bezug auf eine Fahrzeugoberseite nach unten oder in Richtung der Fahrzeughochachse 16 nach oben aus einem Fahrzeugrahmen 17 entnehmbar ist, der neben weiteren Fahrzeugkomponenten den für die Getriebevorrichtung zur Verfügung stehenden Bauraum im Fahrzeug begrenzt.

Ist der Variator 3 wie im vorliegenden Fall zumindest bereichsweise unterhalb eines Ölstandes 18 der Getriebevorrichtung 1 angeordnet, ist der Variator 3 durch geeignete Schotteinrichtungen von dem in einem nicht näher dargestellten Ölsumpf der Getriebevorrichtung 1 angeordneten Hydraulikfluid abzuschotten, um im Betrieb der Getriebevorrichtung 1 sogenannte Planschverluste und somit eine Beeinträchtigung des Gesamtwirkungsgrades der Getriebevorrichtung 1 auf einfache Art und Weise zu vermeiden.

Die Montage des Variators 3 und der Planetengetriebeeinrichtung 4 auf der Trägerplatte 19 bietet auf konstruktiv einfache Art und Weise die Möglichkeit, die zur Darstellung der stufenlosen Übersetzungsveränderung vorgesehenen Getriebekomponenten im Servicefall mit geringem Montageaufwand zu demontieren und durch ein funktionsfähiges Modul zu ersetzen, wobei das defekte Modul 2 im Servicefall durch eine vorgeprüfte Einheit vor Ort am Fahrzeug ersetzbar ist.

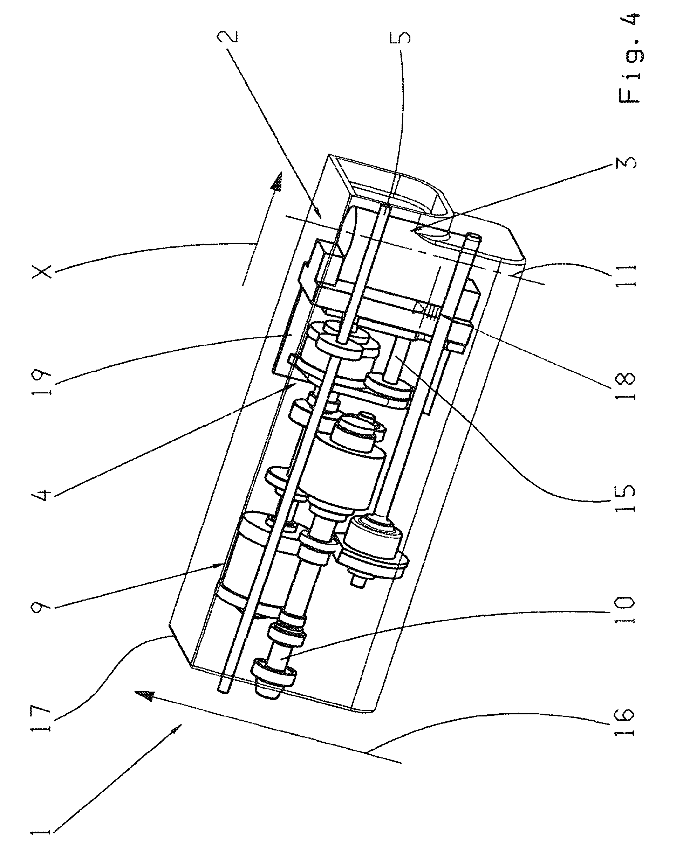

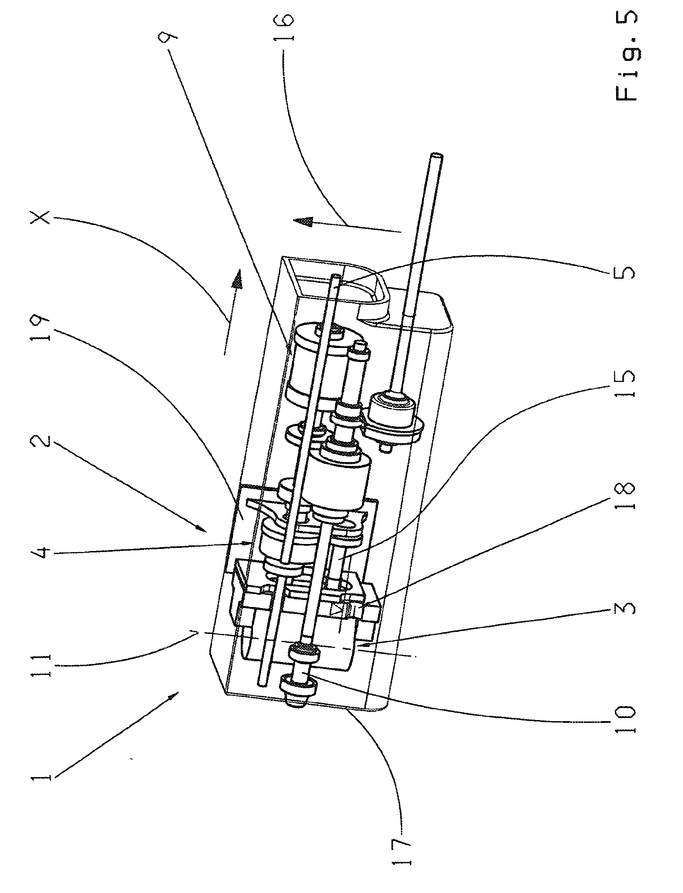

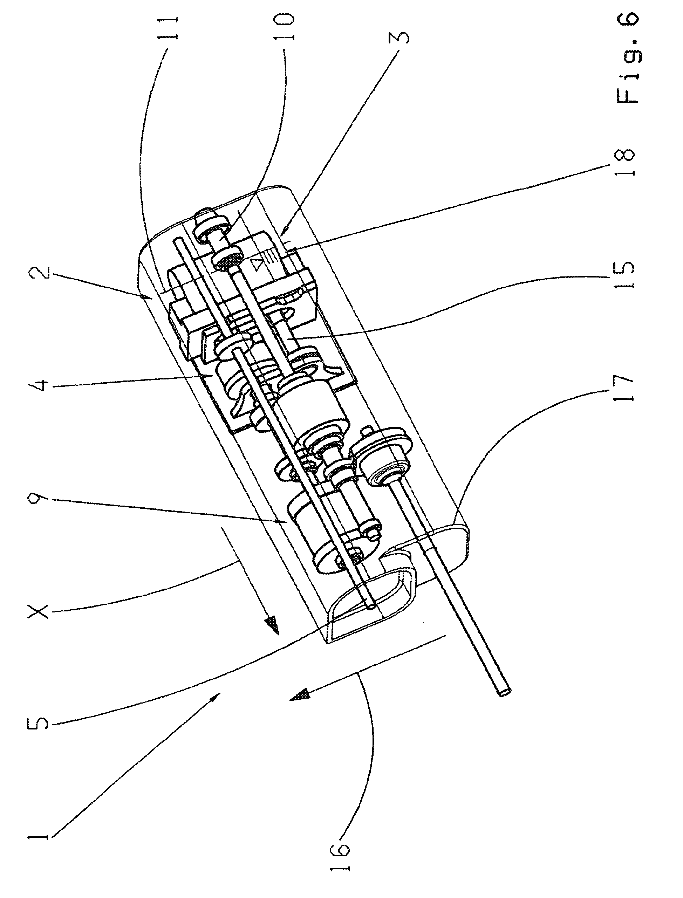

Bei der in Fig. 4 dargestellten Ausführungsform der Getriebevorrichtung 1 ist der stufenlose Antriebssatz bzw. das Modul 2 in Vorwärtsfahrtrichtung X des Fahrzeuges 1 auf der linken Fahrzeugseite in einem der Antriebsmaschine des Fahrzeuges zugewandten Bereich der Getriebevorrichtung 1 angeordnet. Bei den in Fig. 5 und Fig. 6 gezeigten weiteren Ausführungsformen der Getriebevorrichtung 1 ist das Modul 2 jeweils vor einer Fahrzeughinterachse in Bezug auf die Vorwärtsfahrtrichtung X des Fahrzeuges rechten bzw. linken Fahrzeugseite angeordnet und somit bevorzugt in seitlicher Richtung aus dem Getriebegehäuse der Getriebevorrichtung 1 nach dem Lösen der Trägerplatte 19 vom Getriebegehäuse entnehmbar.

### Bezugszeichen

- 1: Getriebevorrichtung
- 2: stufenloser Antriebssatz
- 3: Variator
- 3A: Pumpeneinrichtung
- 3B: Motoreinrichtung
- 4: Planetengetriebeeinrichtung
- 5: Getriebeantriebswelle
- 6: Welle, Planetenträger
- 7: Welle, Sonnenrad
- 8: Stirnradverzahnung
- 9: Schaltgetriebeeinrichtung
- 10: Getriebeabtriebswelle
- 11: Schwenkachse
- 12: Joch
- 13: zweites Sonnenrad
- 14, 15: Variatorwelle
- 16: Fahrzeughochachse
- 17: Fahrzeugrahmen
- 18: Ölstand
- 19: Trägerplatte
- S1 bis S4: Schaltelement
- X: Vorwärtsfahrtrichtung

## Patentansprüche

1. Stufenlose Getriebevorrichtung (1) für ein Fahrzeug mit einem Variator (3), einer Planetengetriebeeinrichtung (4) und einer Schaltgetriebeeinrichtung (9), die in einem Getriebegehäuse angeordnet sind, wobei der Variator (3) im Bereich einer ersten Welle (14) und im Bereich einer zweiten Welle (15) mit der Planetengetriebeeinrichtung (4) und der Schaltgetriebeeinrichtung (9) wirkverbunden ist, wobei der Variator (3) und die Planetengetriebeeinrichtung (4) ein Modul (2) ausbilden und auf einer gemeinsamen Trägerplatte (19) angeordnet sind, **dadurch gekennzeichnet, dass** der Variator (3) länger als breit und tief ist und in seiner Längserstreckung in Einbaulage im Fahrzeug wenigstens annähernd vertikal ausgerichtet ist.

2. Stufenlose Getriebevorrichtung nach Anspruch 1, dadurch **ge-kennzeichnet**, dass eine Welle (13) der Planetengetriebeeinrichtung (4) mit einer Getriebeantriebswelle (5), die mit einer Antriebsmaschine eines Fahrzeugantriebsstranges verbindbar ist, in Wirkverbindung steht und die beiden Wellen (14, 15) des Variators jeweils mit weiteren Wellen (6, 7) der Planetengetriebeeinrichtung (4) wirkverbunden sind.

3. Stufenlose Getriebevorrichtung nach Anspruch 1 oder 2, **dadurch gekennzeichnet, dass** der Variator (3) als Hydrostateinrichtung in Schrägachsenbauweise ausgeführt und mit wenigstens einer Verstelleinheit (3A, 3B) ausgebildet ist.

4. Stufenlose Getriebevorrichtung nach Anspruch 3, **dadurch gekennzeichnet, dass** die Hydrostateinrichtung (3) wenigstens eine verstellbare Pumpeneinrichtung (3A) und mindestens eine verstellbare Motoreinrichtung (3B) aufweist, die gemeinsam verstellbar ausgeführt sind.

5. Stufenlose Getriebevorrichtung nach Anspruch 2 , **dadurch gekennzeichnet, dass** das den Variator (3) und die Planetengetriebeeinrichtung (4) umfassende Modul (2) in Einbaulage in Vorwärtsfahrtrichtung (X) in Bezug auf eine Antriebsmaschine eines Fahrzeuges auf einer rechten oder einer linken Fahrzeugseite angeordnet ist.

6. Stufenlose Getriebevorrichtung nach Anspruch 2, **dadurch gekennzeichnet, dass** der Variator (3) in Einbaulage im Fahrzeugzeug räumlich zwischen der Antriebsmaschine und der Planetengetriebeeinrichtung (4) positioniert ist.

7. Stufenlose Getriebevorrichtung nach Anspruch 2, **dadurch gekennzeichnet, dass** der Variator (3) in Einbaulage im Fahrzeugzeug räumlich zwischen der Planetengetriebeeinrichtung (4) und einer Fahrzeughinterachse positioniert ist.

8. Stufenlose Getriebevorrichtung nach Anspruch 1, **dadurch gekennzeichnet, dass** die Trägerplatte (19) lösbar mit dem Getriebegehäuse verbindbar und ein Teil des Getriebegehäuses ist.

## Claims

1. Continuously variable transmission device (1) for a vehicle, having a variator (3), having a planetary gearing unit (4) and having a shift transmission unit (9) which are arranged in a transmission housing, wherein the variator (3) is operatively connected, in the region of a first shaft (14) and in the region of a second shaft (15), to the planetary gearing unit (4) and to the shift transmission unit (9), wherein the variator (3) and the planetary gearing unit (4) form a module (2) and are arranged on a common mounting plate (19), **characterized in that** the variator (3) is longer than it is wide and deep, and is aligned at least approximately vertically in terms of its longitudinal extent in the installed position in the vehicle.

2. Continuously variable transmission device according to Claim 1, **characterized in that** a shaft (13) of the planetary gearing unit (4) is operatively connected to a gearing drive shaft (5) which can be connected to a drive engine of a vehicle drivetrain, and the two shafts (14, 15) of the variator are operatively connected in each case to further shafts (6, 7) of the planetary gearing unit (4).

3. Continuously variable transmission device according to Claim 1 or 2, **characterized in that** the variator (3) is designed as an oblique-axis type hydrostatic unit, and is formed with at least one adjusting unit (3A, 3B).

4. Continuously variable transmission device according to Claim 3, **characterized in that** the hydrostatic unit (3) has at least one adjustable pump unit (3A) and at least one adjustable motor unit (3B) which are designed so as to be jointly adjustable.

5. Continuously variable transmission device according to Claim 2, **characterized in that**, in the installed position, the module (2) which comprises the variator (3) and the planetary gearing unit (4) is arranged, in the forward direction of travel (X), on a right-hand side or a left-hand side of the vehicle in relation to a drive engine of a vehicle.

6. Continuously variable transmission device according to Claim 2, **characterized in that** the variator (3), in the installed position in the vehicle, is positioned spatially between the drive engine and the planetary gearing unit (4).

7. Continuously variable transmission device according to Claim 2, **characterized in that** the variator (3), in the installed position in the vehicle, is positioned spatially between the planetary gearing unit (4) and a vehicle rear axle.

8. Continuously variable transmission device according to Claim 1, **characterized in that** the mounting plate (19) can be detachably connected to the transmission housing and is a part of the transmission housing.

## Revendications

1. Dispositif de transmission à variation continue (1) pour un véhicule, comprenant un variateur (3), un système de transmission planétaire (4) et un système de transmission à changement de vitesse (9), qui sont disposés dans un boîtier de transmission, le variateur (3) étant en liaison fonctionnelle dans la région d'un premier arbre (14) et dans la région d'un deuxième arbre (15) avec le système de transmission planétaire (4) et le système de transmission à changement de vitesse (9), le variateur (3) et le système de transmission planétaire (4) constituant un module (2) et étant disposés sur une plaque de support commune (19), **caractérisé en ce que** le variateur (3) est plus long que large et profond, et est orienté au moins approximativement verticalement dans son étendue longitudinale dans la position de montage dans le véhicule.

2. Dispositif de transmission à variation continue selon la revendication 1, **caractérisé en ce qu'**un arbre (13) du système de transmission planétaire (4) est en liaison fonctionnelle avec un arbre d'entraînement de transmission (5) qui peut être raccordé à une machine d'entraînement d'une chaîne cinématique du véhicule, et les deux arbres (14, 15) du variateur sont à chaque fois en liaison fonctionnelle avec d'autres arbres (6, 7) du système de transmission planétaire (4).

3. Dispositif de transmission à variation continue selon la revendication 1 ou 2, **caractérisé en ce que** le variateur (3) est réalisé sous forme de système hydrostatique de construction à axes obliques et est réalisé avec au moins une unité de réglage (3A, 3B).

4. Dispositif de transmission à variation continue selon la revendication 3, **caractérisé en ce que** le système hydrostatique (3) présente au moins un système de pompe réglable (3A) et au moins un système de moteur réglable (3B) qui sont réalisés de manière réglable en commun.

5. Dispositif de transmission à variation continue selon la revendication 2, **caractérisé en ce que** le module (2) comprenant le variateur (3) et le système de transmission planétaire (4) est disposé dans la position de montage dans la direction de conduite en marche avant (X) par rapport à une machine d'entraînement d'un véhicule sur un côté droit ou gauche du véhicule.

6. Dispositif de transmission à variation continue selon la revendication 2, **caractérisé en ce que** le variateur (3) est positionné dans la position de montage dans le véhicule spatialement entre la machine d'entraînement et le système de transmission planétaire (4).

7. Dispositif de transmission à variation continue selon la revendication 2, **caractérisé en ce que** le variateur (3) est positionné dans la position de montage dans le véhicule spatialement entre le système de transmission planétaire (4) et un essieu arrière du véhicule.

8. Dispositif de transmission à variation continue selon la revendication 1, **caractérisé en ce que** la plaque de support (19) peut être connectée de manière détachable au boîtier de transmission et constitue une partie du boîtier de transmission.
